# FASCICULE DE BREVET EUROPEEN

(11) **EP 0 297 942 B1**
(45) Date de publication et mention de la délivrance du brevet: **17.12.1997**
(21) Numéro de dépôt: 88401477.0
(22) Date de dépôt: 15.06.1988
(51) Int. Cl.: C04B 35/00, C04B 33/13, B01J 37/00

(54) **Procédé de fabrication d'un support de catalyseur à partir de produit divisé**
Verfahren zur Hersellung eines Katalysatorträger ausgehend von geteilt vorliegenden Stoffen
Process for manufacturing a catalyst support from finely divided materials

(30) Priorité: 19.06.1987 FR 8708606
(43) Date de publication de la demande: 04.01.1989
(73) Titulaire: RHONE-POULENC CHIMIE, 92408 Courbevoie Cédex (FR)
(72) Inventeur: Chopin, Thierry, F-93200 Saint Denis (FR); Quemere, Eric, F-95240 Cormeilles en Parisis (FR); Nortier, Patrice, F-93230 Romainville (FR); Schuppiser, Jean-Luc, F-77410 Claye Souilly (FR); Segaud, Christian, F-69680 Chassieu (FR)
(74) Mandataire: Esson, Jean-Pierre

(56) Documents cités:
- EP-A- 0 079 836
- EP-A- 0 134 138
- FR-A- 1 017 555
- Chemical Abstracts, vol. 88, No. 6, 6 février 1978, page 191, résumé no.40770z, Columbus, Ohio, US; R.J. GLENNON et al.: "The multifunctional role of alginates and xanthan gum in processing alumina and other ceramic bodies , & PROC. - FALL MEET., MATER. EQUIP. WHITEWARES DIV., AM. CERAM. SOC. 1976, 81-3

## Description

L'invention concerne un procédé de fabrication d'un support de catalyseur partir de produit divisé par mise en forme de ce produit et traitement thermique.

Elle concerne plus particulièrement un procédé de fabrication d'un support de catalyseur présentant des propriétés mécaniques améliorées.

On connaît des procédés de fabrication d'articles à partir de produit divisé, telle qu'une poudre, qui consistent soit à agglomérer la poudre par granulation, pastillage, extrusion par exemple, soit à mouler l'article après avoir réalisé une suspension ou une solution du produit divisé, puis après séchage de l'article obtenu, à faire subir un traitement thermique pour éliminer totalement l'eau et obtenir un article solide présentant des propriétés mécaniques convenables pour être utilisé.

Le traitement thermique peut être effectué à plus ou moins haute température selon l'article à fabriquer. Ainsi dans le cas des adsorbants, catalyseurs ou supports de catalyseur et de manière générale pour l'obtention d'articles à volume poreux important, le traitement thermique est une calcination à une température de l'ordre de 600°C pour éviter la disparition des pores, au contraire dans le cas d'articles céramiques, le traitement thermique est un frittage effectué à température élevée pour obtenir un produit compact et dense.

Dans les procédés connus, des additifs sont ajoutés pour favoriser la mise en forme. Toutefois, les articles obtenus après traitement thermique ne présentent pas de bonnes propriétés mécaniques.

Ainsi, les catalyseurs ou supports de catalyseur à base d'alumine présentent des résistances à l'écrasement (ESH) ou à l'écrasement grain à grain (EGG) relativement faibles qui peuvent entrainer des casses pendant la manipulation du catalyseur ou son utilisation.

Par ailleurs, les supports de catalyseur sont imprégnés par des solutions de précurseurs des éléments constituant la phase catalytiquement active. Les supports fabriqués selon les procédés connus peuvent éclater lors de cette imprégnation. Le pourcentage d'éclatement ou de casse peut être important selon la poudre de départ.

La présente invention a notamment pour objet de remédier à ces inconvénients en proposant un procédé de fabrication d'articles à partir de produit divisé permettant d'obtenir après traitement thermique (frittage ou calcination) un support de catalyseur présentant des propriétés mécaniques notablement améliorées et une facilité d'imprégnation sans éclatement.

A cet effet, le procédé de l'invention pour la fabrication d'un article à partir de produit divisé par mise en forme du produit et traitement thermique subséquent est caractérisé en ce qu'il consiste à ajouter au produit divisé au moins un composé polysaccharide obtenu par fermentation bactérienne ou fermentation fongique.

La présence de ce composé lors du traitement thermique permet d'obtenir des articles présentant de meilleures propriétés mécaniques.

Comme composés polysaccharides obtenus par fermentation bactérienne convenables pour l'invention, on peut citer les gommes xanthanes, les gommes succinoglycanes ou l'hétéropolysaccharides S-194 décrit notamment dans le brevet Ep 77680.

Les gommes xanthanes sont obtenues par fermentation d'un hydrate de carbone sous l'action de microorganismes et plus particulièrement de bactéries appartenant au genre xanthomonas.

Les bactéries sont décrites dans Bergey's manual of determinative bacteriology (8e édition - 1974 - Williams N. Wilkins C° Baltimore) telles que Xanthomonas begoniae, Xanthomonas campestris, Xanthomonas carotae, Xanthomonas hederae, Xanthomonas incanae, Xanthomonas malvacearum, Xanthomonas papavericola, Xanthomonas phaseoli, Xanthomonas pisi, Xanthomonas vasculorum, Xanthomonas vesicatoria, Xanthomonas vitians, Xanthomonas pelargonii. Parmi les autres microorganismes capables de produire des polysaccharides de propriétés similaires on peut citer les bactéries appartenant au genre Arthrobacter et plus particulièrement les espèces Arthrobacter stabilis, Arthrobacter viscosus ; au genre Erwinia ; au genre Azotobacter et plus particulièrement l'espèce Azotobacter indicus ; au genre Agrobacterium et plus particulièrement les espèces Agrobacterium radiobacter, Agrobacterium rhizogènes, Agrobacterium tumefaciens ;

Bien entendu, cette liste est donnée uniquement à titre d'exemple et n'est pas limitative.

Comme composés polysaccharides obtenus par fermentation fongique convenables pour l'invention, on peut citer les gommes scléroglucane synthétisées par fermentation d'un hydrate de carbone à l'aide de champignons appartenant au genre Sclerotium et plus particulièrement aux espèces Sclerotium glucancium, et Sclerotium rolfsii.

Les composés polysaccharides de l'invention ont un poids moléculaire élevé, avantageusement supérieur à 10⁶ g. Ce sont généralement des poudres qui peuvent être dispersées dans un liquide, avantageusement l'eau, ou solubilisées. Ces composés ont un comportement pseudoplastique en solution.

Selon l'invention, les articles sont obtenus à partir de produit divisé. Par produit divisé, on entend des poudres, des agglomérats ou analogues.

Ces produits divisés sont mis en forme selon les méthodes connues et classiques.

Ainsi, pour être mis en forme, ils peuvent être soit sous forme sèche, soit sous forme humide, pâteuse, liquide ou en suspension, ou sous forme de gel obtenu par dispersion ou mélange de réactifs.

Ainsi, les procédés de mise en forme qui peuvent être utilisés selon l'état du produit (sec, humide, pâteux ou liquide) sont, par exemple, le pastillage, le compactage, la granulation, la dragéification, l'extrusion, le séchage par atomisation, la coagulation en gouttes appelée également "oil drop" et le moulage. Cette mise en forme comprend généralement une étape de dispersion, par exemple par malaxage.

Pour faciliter la mise en forme, on peut utiliser des additifs connus de l'homme du métier.

Le produit divisé est un composé tel qu'un oxyde métallique, une matière céramique, par exemple, ou un mélange de composés.

Comme produits divisés convenables, notamment pour la fabrication de supports de catalyseur on peut citer les oxydes métalliques tels que l'alumine, l'oxyde de titane, la silice, l'oxyde de zirconium, par exemple, les sulfures métalliques et plus généralement tout composé minéral utilisé pour fabriquer ces articles.

Sont convenables pour la présente invention, toute matière céramique soit du type oxyde, comme par exemple la silice, les silicates (mullite, cordiérite, zircon, etc...), l'alumine, les aluminates (spinelles, etc...), les aluminosilicates (argiles, etc...), l'oxyde de titane TiO₂, les titanates (BaTiO₃, MgTiO₃, etc...), la magnésie, la zircone, les oxydes de tettes rares (ThO₂, CeO₂ etc...), soit du type non oxyde comme par exemple le carbure de bore, le carbure de silicium, le nitrure de bore ou le nitrure de silicium, soit enfin de type mixte, comme par exemple l'oxynitrure de silicium et d'aluminium (Sialon).

Bien entendu, ces listes de composés ne sont nullement limitatives et ne sont données qu'à titre d'exemple. On peut également bien sûr utiliser des mélanges de ces composés.

Les produits obtenus sont ensuite séchés à une température de l'ordre de 100°C à 150°C.

Enfin, les articles secs sont soumis à un traitement thermique de calcination conduite à une température comprise entre 300 et 800°C selon la nature du produit.

Les polysaccharides sont, selon une caractéristique de l'invention, présents dans l'article avant traitement thermique dans une proportion pondérale comprise entre 0,2 et 5 % par rapport au produit divisé, avantageusement entre 0,4 et 3 %.

D'autres détails, avantages et but de l'invention seront illustrés par les exemples donnés ci-dessous uniquement à titre indicatif.

### Exemple 1

On fabrique un support de catalyseur à base d'alumine par malaxage de boehmite de surface spécifique 230 m²/g et volume poreux 0,5 cm²/g en présence de 3 % en poids d'acide nitrique par rapport à la masse d'alumine, de 60 % d'eau et 1 % de gomme xanthane commercialisée par la Société Rhône-Poulenc sous la marque commerciale Rhodopol.

La pâte obtenue est ensuite extrudée, séchée et calcinée à 600°C.

Le support de catalyseur A obtenu, conforme à l'invention est soumis à un test d'imprégnation pour contrôler "le taux de casse" des articles obtenus.

Ce taux de casse correspond au pourcentage d'articles ayant éclaté lors de l'immersion dans de l'eau à 20°C.

Il est déterminé par trempage de 20 articles, dans le cas précis 20 extrudés dans de l'eau et détermination du nombre d'articles qui ont éclaté. On comptabilise plus particulièrement les extrudés ayant éclaté transversalement car les morceaux obtenus ne présentant plus qu'une faible résistance mécanique et sont inutilisables.

On détermine également la résistance à l'écrasement (ESH) selon des méthodes Shell, ainsi que la résistance à l'écrasement grain à grain (E.G.G.) selon la méthode standart ASTM 04 179-82 sur les catalyseurs.

Les résultats sont rassemblés dans le tableau I.

### Exemple 2 comparatif

On réalise l'exemple 1 avec les mêmes produits et selon le même procédé, toutefois la gomme xanthane n'est pas additionnée dans la boehmite. On obtient le catalyseur B dont les propriétés sont déterminées comme dans l'exemple 1.

**Tableau I**

| Exemple | article | % Gomme Xanthane | ESH MPa | EGG daN/mm | % Casse |
|---|---|---|---|---|---|
| 1 | A | 1 | 1,46 | 2,38 | 2 |
| 2 | B | 0 | 1,12 | 1,06 | 4 |

### Exemples 3 à 4

On opère de manière analogue à l'exemple 1. Le produit divisé est un gel d'alumine contenant 20 % d'eau et commercialisé sous la dénomination gel Condéa.

On ajoute au gel d'alumine 2 % en poids par rapport à l'alumine de gomme xanthane sous forme de poudre.

On obtient après extrusion, séchage et calcination à une température de 600°C, un article (C) utilisable comme support de catalyseur.

A partir du même gel d'alumine et selon le même procédé, mais en l'absence de gomme xanthane, on réalise un support de catalyseur (D).

Les propriétés des produits obtenus sont rassemblées dans le tableau II ci-dessous :

**Tableau II**

| Exemple | article | % Gomme xanthane | ESH MPa | EGG daN/mm | % casse |
|---|---|---|---|---|---|
| 3 | C | 2 (poudre) | 0,98 | 1,90 | 0 |
| 4 | D | 0 | 0,79 | 1,34 | 22 |

### Exemples 5 à 8

Dans ces exemples, la gomme xanthane a été ajoutée à différentes proportions et sous forme de solution aqueuse à un gel d'alumine. Les supports de catalyseur ont été obtenus selon le procédé décrit à l'exemple 1.

Ces essais et résultats sont rassemblés dans le tableau III ci-dessous.

**Tableau III**

| Exemple | article | % Gomme xanthane | ESH MPa | EGG daN/mm | % casse |
|---|---|---|---|---|---|
| 5 | E | 0 | 0,96 | 1,76 | 8 |
| 6 | F | 0,25 (solution) | 1,10 | 1,87 | 2 |
| 7 | G | 0,5 (solution) | 1,12 | 2,11 | 0 |
| 8 | H | 3 (poudre) | 1,33 | 2,15 | 0 |

Les exemples 1 à 8 montrent clairement l'effet de l'addition de la gomme xanthane et plus généralement d'un composé polysaccharide conforme à la définition de l'invention sur les propriétés mécaniques et la tenue à l'imprégnation des produits poreux à base d'alumine.

## Revendications

1. Procédé de fabrication d'un support de catalyseur à partir de produit divisé par mise en forme dudit produit et calcination subséquente effectuée à une température comprise entre 300 et 800 °C, dans lequel on ajoute audit produit divisé au moins un composé polysaccharide obtenu par fermentation bactérienne ou fermentation fongique.

2. Procédé selon la revendication 1, caractérisé en ce que le composé polysaccharide précité est un composé à poids moléculaire élevé, de préférence supérieur à 10⁶ g, et ayant un comportement pseudo-plastique en solution.

3. Procédé selon la revendication 1 ou 2, caractérisé en ce que le compose polysaccharide précité obtenu par fermentation bactérienne est choisi dans le groupe comprenant les gommes xanthanes, les gommes succinoglycanes.

4. Procédé selon la revendication 1 ou 2, caractérisé en ce que le composé polysaccharide précité obtenu par fermentation fongique est une gomme scéroglucane.

5. Procédé selon l'une des revendications 1 à 4, caractérisé en ce que le composé polysaccharide est ajouté sous forme solide, de préférence sous forme de poudre.

6. Procédé selon l'une des revendications 1 à 4, caractérisé en ce que le composé polysaccharide est ajouté sous forme de solution.

7. Procédé selon l'une des revendications précédentes, caractérisé en ce que les gommes xanthanes sont obtenues par fermentation d'un hydrate de carbone sous l'action de bactéries appartenant au genre Xanthomonas.

8. Procédé selon l'une des revendications 1, 2, 3, 5, 6 ou 7, caractérisé en ce que les polysaccharides d'origine bactérienne sont obtenus par fermentation d'un hydrate de carbone sous l'action de bactéries appartenant au genre Arthrobacter, Erwinia, Azotobacter, Agrobactérium.

9. Procédé selon l'une des revendications précédentes, caractérisé en ce que le polysaccharide précité est ajouté dans des proportions pondérales comprises entre 0,2 % et 5 % par rapport au produit-divisé.

10. Procédé selon la revendication 9, caractérisé en ce que le polysaccharide est ajouté dans des proportions pondérales comprises entre 0,4 % et 3 % par rapport au produit divisé.

11. Procédé selon l'une des revendications précédentes, caractérisé en ce que le produit divisé est une poudre choisie parmi des oxydes métalliques.

12. Procédé selon la revendication 11, caractérisé en ce que les oxydes métalliques sont choisis parmi les oxydes d'alumine, oxydes de titane, silice, oxyde de zirconium.

## Claims

1. Process for the manufacture of a catalyst support from divided product by forming the said product and subsequent calcining performed at a temperature of between 300 and 800°C, and in which at least one polysaccharide compound obtained by bacterial fermentation or fungal fermentation is added to the said divided product.

2. Process according to Claim 1, characterized in that the abovementioned polysaccharide compound is a compound of high molecular weight, preferably higher than 10⁶ g, which has a pseudoplastic behaviour in solution.

3. Process according to Claim 1 or 2, characterized in that the abovementioned polysaccharide compound obtained by bacterial fermentation is chosen from the group including xanthan gums and succinoglycan gums.

4. Process according to Claim 1 or 2, characterized in that the abovementioned polysaccharide compound obtained by fungal fermentation is a scleroglucan gum.

5. Process according to one of Claims 1 to 4, characterized in that the polysaccharide compound is added in solid form, preferably in powder form.

6. Process according to one of Claims 1 to 4, characterized in that the polysaccharide compound is added in solution form.

7. Process according to one of the preceding claims, characterized in that the xanthan gums are obtained by fermentation of a carbohydrate under the action of bacteria belonging to the genus Xanthomonas.

8. Process according to one of Claims 1, 2, 3, 5, 6 or 7, characterized in that the polysaccharides of bacterial origin are obtained by fermentation of a carbohydrate under the action of bacteria belonging to the genus Arthrobacter, Erwinia, Azotobacter or Agrobacterium.

9. Process according to one of the preceding claims, characterized in that the abovementioned polysaccharide is added in weight proportions of between 0.2 % and 5 % relative to the divided product.

10. Process according to Claim 9, characterized in that the polysaccharide is added in weight proportions of between 0.4 % and 3 % relative to the divided product.

11. Process according to one of the preceding claims, characterized in that the divided product is a powder chosen from metal oxides.

12. Process according to Claim 11, characterized in that the metal oxides are chosen from alumina oxides, titanium oxides, silica and zirconium oxide.

## Patentansprüche

1. Verfahren zur Herstellung eines Trägermaterials für einen Katalysator ausgehend von einem fein verteilten Produkt durch Formgebung dieses Produktes und anschließende Calcinierung bei einer Temperatur von 300 °C bis 800 °C, wobei man zu dem fein verteilten Produkt mindestens eine Polysaccharidverbindung hinzugibt, die durch bakterielle Fermentation oder Pilzfermentation erhalten ist.

2. Verfahren nach Anspruch 1, dadurch gekennzeichnet, daß die zuvor genannte Polysaccharidverbindung eine Verbindung mit hohem Molekulargewicht, vorzugsweise von mehr als 10⁶ g, und mit einem pseudoplastischen Verhalten in Lösung ist.

3. Verfahren nach Anspruch 1 oder 2, dadurch gekennzeichnet, daß die zuvor genannte, durch bakterielle Fermentation erhaltene Polysaccharidverbindung ausgewählt ist aus der Gruppe von Xanthangummis und Succinoglykangummis.

4. Verfahren nach Anspruch 1 oder 2, dadurch gekennzeichnet, daß die zuvor genannte, durch Pilzfermentation erhaltene Polysaccharidverbindung ein Skeroglukangummi ist.

5. Verfahren nach einem der Ansprüche 1 bis 4, dadurch gekennzeichnet, daß die Polysaccharidverbindung in fester Form, vorzugsweise in Pulverform, hinzugegeben wird.

6. Verfahren nach einem der Ansprüche 1 bis 4, dadurch gekennzeichnet, daß die Polysaccharidverbindung in Form einer Lösung hinzugegeben wird.

7. Verfahren nach einem der vorhergehenden Ansprüche, dadurch gekennzeichnet, daß die Xanthangummis erhalten sind durch Fermentation eines Kohlenhydrates unter Einwirkung von Bakterien, die zu der Gattung Xanthomonas gehören.

8. Verfahren nach einem der Ansprüche 1, 2, 3, 5, 6 oder 7, dadurch gekennzeichnet, daß die Polysaccharide bakteriellen Ursprungs erhalten sind durch Fermentation eines Kohlenhydrates unter Einwirkung von Bakterien, die zu der Gattung Arthrobacter, Erwinia, Azotobacter oder Agrobacterium gehören.

9. Verfahren nach einem der vorhergehenden Ansprüche, dadurch gekennzeichnet, daß das zuvor genannte Polysaccharid in Gewichtsmengen von 0,2 % bis 5 % hinzugegeben wird, bezogen auf das fein verteilte Produkte.

10. Verfahren nach Anspruch 9, dadurch gekennzeichnet, daß das Polysaccharid in Gewichtsmengen von 0,4 % bis 3 % hinzugegeben wird, bezogen auf das fein verteilte Produkt.

11. Verfahren nach einem der vorhergehenden Ansprüche, dadurch gekennzeichnet, daß das fein verteilte Produkt ein Pulver ist, das ausgewählt ist aus Metalloxiden.

12. Verfahren nach Anspruch 11, dadurch gekennzeichnet, daß die Metalloxide ausgewählt sind aus Aluminiumoxiden, Titanoxiden, Siliciumdioxid und Zirkoniumoxid.
